# EUROPÄISCHE PATENTSCHRIFT

(11) **EP 0 475 296 B1**
(45) Veröffentlichungstag und Bekanntmachung des Hinweises auf die Patenterteilung: **12.07.1995**
(21) Anmeldenummer: 91115094.4
(22) Anmeldetag: 06.09.1991
(51) Int. Cl.: H02M 3/335

(54) **Getaktete Stromversorgunseinrichtung mit einem Fluss- und einem Sperrwandlerausgang**
Switching power supply device with a forward- and a flyback-converter output
Dispositif d'alimentation à découpage avec une sortie à convertisseur direct et une sortie à convertisseur à récupération

(30) Priorität: 07.09.1990 DE 4028471
(43) Veröffentlichungstag der Anmeldung: 18.03.1992
(73) Patentinhaber: ANT Nachrichtentechnik GmbH, D-71522 Backnang (DE)
(72) Erfinder: Grünsch, Eckhardt, W-7173 Mainhardt (DE)

(56) Entgegenhaltungen:
- DE-A- 3 837 933
- DE-A- 3 940 955
- PATENT ABSTRACTS OF JAPAN vol. 12, no. 256 (E-635)(3103) 19. Juli 1988 & JP-63 043 566
- IBM TECHNICAL DISCLOSURE BULLETIN. Bd. 21, Nr. 12, Mai 1979, NEW YORK US Seiten 4909 - 4910 ;
- HOFFMAN JR: 'Multiple Regulator Controls using Diversion Switches'

## Beschreibung

Die Erfindung betrifft eine getaktete Stromversorgungseinrichtung nach dem Oberbegriff des Patentanspruches 1. Eine solche Stromversorgungseinrichtung ist aus JP 63-43566 (A) bekannt.

Für die Versorgung elektronischer Geräte werden oft Stromversorgungseinrichtungen benötigt, die mehrere geregelte bzw. stabilisierte Ausgangsgleichspannungen für unterschiedliche Belastungen abgeben. Aus der DE 38 37 933 A1 ist es bekannt, in Abhängigkeit der Sperrwandler-Ausgangsspannung die Einschaltdauer des Stellgliedes im Primärkreis zu ändern. Die Regelung des Flußwandlers erfolgt über einen Transduktor in dessen Ausgangskreis. Bei der getakteten Stromversorgung gemäß DE 39 12 849 A1 ist zur Steuerung der Sperrwandler-Ausgangsspannung die Entladezeit des Transformators, der zur galvanischen Trennung zwischen Primärkreis und den beiden Sekundärkreisen vorgesehen ist, veränderbar und zwar dadurch, daß zum Ausgang des Sperrwandlers ein Transistor zur Erzielung eines Kurzschlusses geschaltet ist.

Beim aus der JP 63-43566 (A) bekannten Schaltregler sind die Fluß- und Sperrwandlerausgänge nicht einzeln regelbar, sondern laufen nur über die magnetische Kopplung mit. Die überschüssige Energie im Sperrwandlerausgangskreis wird über eine Hilfswicklung auf der Schaltreglerdrossel und eine Diode in den Flußwandlerausgangskreis abgegeben.

Aufgabe vorliegender Erfindung ist es die Stromversorgungseinrichtung gemäß dem Oberbegriff des Patentanspruchs 1 so auszubilden, daß eine Regelung mehrerer Ausgänge aufwandsarm möglich ist.

Diese Aufgabe wird durch die Merkmale des Anspruchs 1 gelöst. Die Unteransprüche zeigen vorteilhafte Ausgestaltungen auf.

Die Erfindung geht von der Erkenntnis aus, daß mit einem Sperrwandlerübertrager sowohl ein Flußwandlerausgang kombiniert mit einem oder mehreren Sperrwandlerausgängen erzeugt werden kann, wobei der Sperrwandlerübertrager während seiner Energieaufnahmephase gleichzeitig die Energie für den Flußwandlerausgang überträgt.

Bei der Energieabgabephase wird dann ein Sperrwandlerausgang oder werden mehrere Sperrwandlerausgänge mit Energie versorgt, wobei die überschüssige Energie eines Sperrwandlerausganges mittels eines sekundärseitigen Stellgliedes auf den geregelten Flußwandlerausgang umgeleitet wird.

Das sekundärseitige Stellglied wird von einem Fehlerverstärker eines Sperrwandlerausganges gesteuert.

Der Fehlerverstärker des Flußwandlerausganges steuert dabei die Einschaltdauer des primärseitigen Stellgliedes, über das der Sperrwandlerübertrager Energie aufnimmt.

Auf diese Weise lassen sich aufwandsarm und kostengünstig mehrere geregelte Ausgänge erzeugen, wobei der Flußwandlerausgang vorteilhaft wegen der relativ geringen Stromwelligkeit für höhere Ausgangsströme eingesetzt werden kann.

Teure Transduktorregler sind bei Geräten mit mehreren geregelten Ausgängen nicht mehr erforderlich.

Außerdem besitzt die Stromversorgungseinrichtung im Gegensatz zur Regelung gemäß DE 39 12 849 A1 einen hohen Wirkungsgrad.

Anhand der Zeichnungen wird die Erfindung nun näher erläutert. Es zeigen
Figur 1 ein Prinzipschaltbild der Stromversorgung gemäß der Erfindung
Figur 2 die Kennlinien von Fluß- und Sperrwandler.

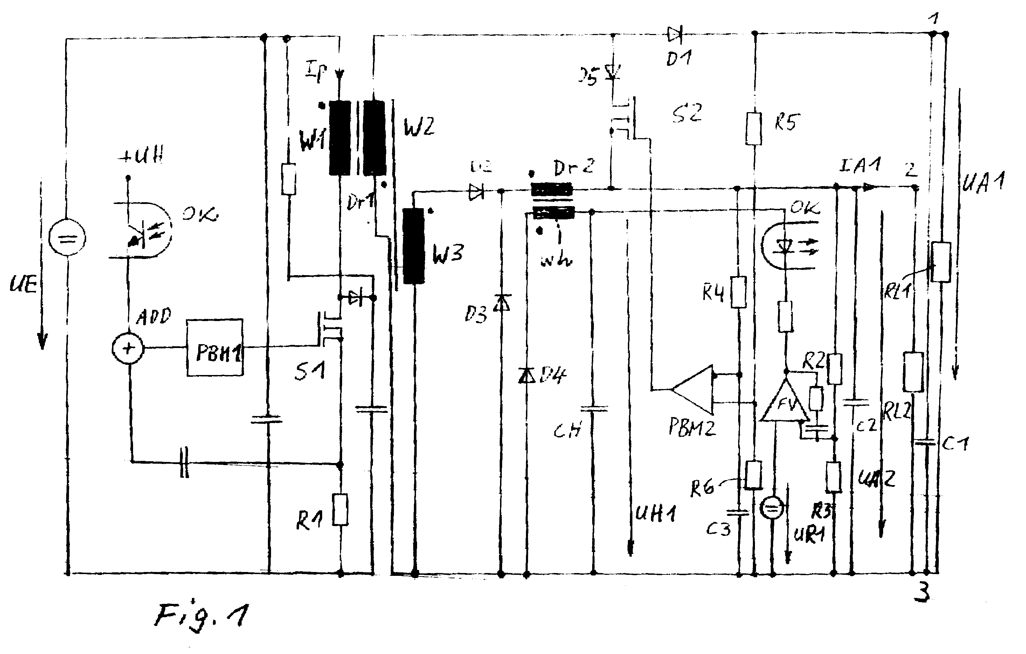

Die Eingangsgleichspannung UE der getakteten Stromversorgungseinrichtung gemäß Figur 1 liegt an der Serienschaltung, bestehend aus der Primärwicklung W1 des Sperrwandlerübertragers Dr1 und dem Stellglied S1 - hier als Feldeffekttransistor ausgebildet. Der Sperrwandlerübertrager Dr1 ist so ausgestaltet, daß eine relativ hohe Energie gespeichert werden kann. Im Gegensatz zu einem Flußwandlerübertrager weist er eine niedrige Induktivität mit Luftspalt auf. Eine erste Sekundärwicklung W2 des Sperrwandlerübertragers hat einen solchen Wicklungssinn - durch einen Punkt markiert -, daß ein Sperrwandlerausgangskreis entsteht mit zugehörigem Gleichrichter D1 und Glättungskondensator C1. Zwischen den Klemmen 1 und 3 ist die Ausgagsspannung UA1 dieses Sperrwandlerausgangskreises zur Versorgung eines ersten Verbrauchers RL1 abgreifbar. Eine zweite Sekundärwicklung W3 des Sperrwandlerübertragers Dr1 hat einen solchen Wicklungssinn - ebenfalls durch einen Punkt markiert -, daß ein Flußwandlerausgangskreis entsteht mit zugehörigem Gleichrichter D2, Freilaufdiode D3, Glättungsdrossel Dr und Glättungskondensator C2.

Die Ausgangsspannung UA2 dieses Flußwandlerausgangskreises ist zwischen den Klemmen 2 und 3 zur Versorgung eines zweiten Verbrauchers RL2 abgreifbar. Das Stellglied S1 wird über einen Pulsbreitenmodulator PBM1 gesteuert und zwar in Abhängigkeit des primärseitigen Energieaufnahmestromes Ip durch die Induktivität des Sperrwandlerübertragers Dr1. Dieser Strom wird über den Strommeßwiderstand R1 erfaßt und einem Steuersignal, welches über den Optokoppler OK vom Flußwandlerausgangskreis zum Pulsbreitenmodulator PBM1 geführt ist, zugesetzt. Das Steuersignal ist proportional zur Ausgangsspannung UA2. Es wird zum energieaufnahmestromproportionalen Signal addiert - Stufe ADD. Dieses Additionssignal bestimmt den Abschaltzeitpunkt für das Stellglied S1; d.h wenn das Additionssignal eine bestimmte Höhe erreicht hat, wird das Stellglied S1 über den Pulsbreitenmodulator PBM1 abgeschaltet. Der Pulsbreitenmodulator PBM1 wird bei dem vorgestellten Ausführungsbeispiel außerdem so betrieben, daß das Stellglied S1 mit konstanter Abschaltzeit arbeitet, vgl. hierzu beispielsweise EP 0 20 56 30 B1.

Zur Gewinnung des zur Ausgangsspannung UA2 proportionalen Steuersignals ist ein Fehlersignalverstärker FV vorgesehen, welcher den am Spannungsteiler R2, R3 für die Ausgangsspannung UA2 auftretenden Spannungsabfall mit einer Referenzspannung UR1 vergleicht. Der Ausgang des Fehlerverstärkers FV ist mit der Kathode der Fotodiode des Optokopplers OK verbunden. Die Anode dieser Fotodiode ist mit einer Hilfsspannung UH1 beaufschlagt, die über eine Hilfswicklung wh auf der Glättungsdrossel Dr2, eine Diode D4 und einen Ladekondensator CH gewonnen wird. Der Fehlerverstärker FV ist über ein RC-Glied dynamisch gegengekoppelt. Je höher die Ausgangsspannung des Fehlerverstärkers FV ist, umso größer ist der Strom durch die Fotodiode des Optokopplers OK und umso eher tritt der Abschaltzeitpunkt für das Stellglied S1 ein.

Zur Abgabe der überschüssigen Energie im Sperrwandlerausgangskreis in den Flußwandlerausgangskreis ist eine Steuereinrichtung vorgesehen, bestehend aus dem Schalter S2, hier als Feldeffekttransistor ausgebildet, und dem Pulsbreitenmodulators PBM2 in Form eines Komparators. Der Schalter S2, dem eine Schutzdiode D5 in Serie geschaltet ist, liegt zwischen dem potentialführenden Wicklungsende der Sekundärwicklung W2 und der Ausgangsklemme 2. Als Steuerkriterium für diesen Komparator wird vorteilhafterweise die Welligkeit - der Wechselanteil - des Flußwandlerausgangssignals verwendet, in welcher sich das Schaltspiel des Stellgliedes S1 - Einschalt-Ausschaltperiodizität - wiederspiegelt. Alternativ hierzu könnte natürlich auch ein separater Taktgeber, wie bei Pulsbreitenmodulatoren üblich, vorgesehen sein, was jedoch einen Mehraufwand bedeutet. Zur Auswertung der "Welligkeit" ist der invertierende Eingang des Komparators PBM2 über den Widerstand R4 mit der Klemme 2, deren Spannung in diesem Fall gleichzeitig die Referenzspannung für den Komparator PBM2 darstellt, und über den Kondensator C3 an die Klemme 3 des Flußwandlerausganges angeschlossen. Mit diesem R-C-Glied werden störende Schaltspitzen vom invertierten Eingang des Komparators PBM2 ferngehalten. Der nichtinvertierende Eingang des Komparators PBM2 liegt an einer Bezugsspannung, z.B. die durch einen Spannungsteiler R5, R6 abgegriffene Ausgangsspannung des Sperrwandlerkreises.

Mit dem Komparator PBM2 wird nun die Ausgangsspannung eines Sperrwandlerausganges mit der Referenzspannung verglichen, die in diesem Beispiel durch die Ausgangsspannung des Flußwandlerausganges gebildet wird. Da dieser Ausgangsspannung eine Spannungswelligkeit überlagert ist, wird zur Erzeugung des pulsbreitenmodulierten Signales kein zusätzlicher Sägezahngenerator benötigt. Das auf diese Weise durch den Pulsbreitenmodulator PBM2 gewonnene Signal steuert nun das sekundärseitige Stellglied S2.

Da hier zur Erzeugung des pulsbreitenmodulierten Signales die Spannungswelligkeit des Flußwandlerausganges verwendet wird, ergibt sich der Vorteil, daß das sekundärseitige Stellglied S2 frequenzsynchron zum primärseitigen Stellglied schaltet.

Wird zum Beispiel der Sperrwandlerausgang (UA1) entlastet, fließt die überschüssige Energie über das Stellglied S2 auf den Flußwandlerausgang (UA2), was zum Ansteigen dieser Spannung führt. Dieser Spannungsanstieg wird durch den Fehlerverstärker FV wieder korrigiert, indem die Einschaltdauer des primärseitigen Stellgliedes S1 verkürzt wird, was zur Folge hat, daß weniger Energie in den Flußwandlerausgang fließt und die Ausgangsspannung konstant bleibt.

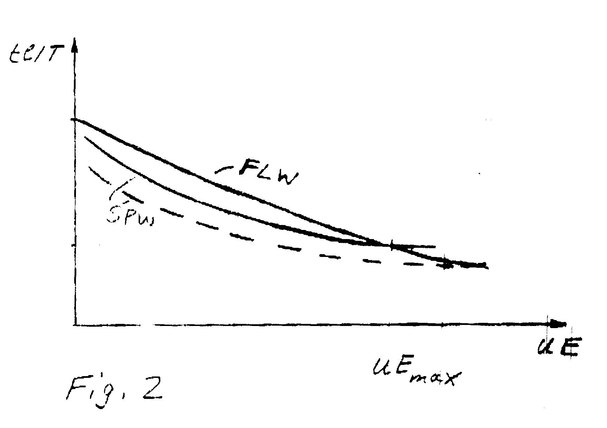

Die Möglichkeit der Abgabe Von Energie vom Sperrwandlerausgangskreis in den Flußwandlerausgangskreis besteht so lange, wie der Sperrwandlerübertrager Dr1 eine Gleichstromvormagnetisierung aufweist. Bei Erreichen des Schnittpunktes zwischen Flußwandler (FLW)-und Sperrwandler (SPW)-Kennlinie (Figur 2 bei UEₘₐₓ) ist der Regelbereich normalerweise zu Ende. Über das Übersetzungsverhältnis des Sperrwandlerübertragers Dr1; d. h. das Windungsverhältnis der Wisklungen W1, W2 und W3, läßt sich dieser Regelbereich einstellen und erweitern. In Figur 2, gestrichelte Darstellung, wurde durch Änderung dieses Übersetzungsverhältnisses die Kennlinie des Sperrwandlers so verschoben, daß der Kennlinien-Schnittpunkt erst später auftritt.

Das Prinzip der Erfindung kann natürlich auch für getaktete Stromversorgungseinrichtungen mit mehr als zwei Ausgangskreisen sinngemäß angewendet werden, z. B. mit mehreren Sperrwandlerausgängen.

## Patentansprüche

1. Getaktete Stromversorgungseinrichtung, die im Primärkreis ein über einen Pulsbreitenmodulator (PBM1) gesteuertes Stellglied (S1) enthält mit einem Flußwandlerausgang und einem Sperrwandlerausgang mit Mitteln zur Abgabe der überschüssigen Energie im Sperrwandlerausgangskreis in den Flußwandlerausgangskreis, dadurch gekennzeichnet, daß ein steuerbarer elektronischer Einwegschalter (S2) vorgesehen ist über welchen eine Verbindung vom Sperrwandlerausgangskreis zum Flußwandlerausgangskreis schaltbar ist und daß diesem Einwegschalter (S2) eine Steuereinrichtung (PBM2) zugeordnet ist zur Steuerung desselben in Abhängigkeit eines Flußwandlerausgangssignals.

2. Stromversorgungseinrichtung nach Anspruch 1, dadurch gekennzeichnet, daß die Steuereinrichtung (PBM2) als Pulsbreitenmodulator ausgebildet ist.

3. Stromversorgungseinrichtung nach Anspruch 1 oder 2, dadurch gekennzeichnet, daß der Steuereinrichtung (S2,PBM2) bzw. dem ihr zugeordneten Pulsbreitenmodulator (PBM2) als Steuerkriterium der Wechselanteil des Flußwandlerausgangssignals zuführbar ist.

4. Stromversorgungseinrichtung nach einem der Ansprüche 1 bis 3, dadurch gekennzeichnet, daß die Einschaltzeit des Stellgliedes (S1) in Abhängigkeit der Flußwandlerausgangsspannung (UA2) oder dem Flußwandlerausgangsstrom (IA1) steuerbar ist und dessen Ausschaltzeit konstant gehalten wird.

5. Stromversorgungseinrichtung nach einem der Ansprüche 1 bis 4, welche einen Sperrwandlerübertrager (Drl) zur galvanischen Trennung des Eingangskreises von den Ausgangskreisen aufweist, dadurch gekennzeichnet, daß der Regelbereich der Stromversorgungseinrichtung über das Übersetzungsverhältnis des Sperrwandlerübertragers (Dr1) einstellbar ist.

## Claims

1. Switched current supply device, which in the primary circuit contains a setting member (S1) controlled by way of a pulse width modulator (PBM1), comprising a forward converter output and a flyback converter output with means for the delivery of the surplus energy in the flyback converter output circuit into the forward converter output circuit, characterised thereby that a controllable electronic discriminating switch (S2) is provided, by way of which a connection of the forward converter output circuit to the flyback converter output circuit is switchable and that this discriminating switch (S2) is associated with a control device (PBM2) for control thereof in dependence on a flyback converter output signal.

2. Current supply device according to claim 1, characterised thereby that the control device (PBM2) is constructed as a pulse width modulator.

3. Current supply device according to claim 1 or 2, characterised thereby that the alternating component of the flyback converter output signal is feedable to the control device (S2, PBM2) or pulse width modulator (PBM2) associated therewith as control criterion.

4. Current supply device according to one of claims 1 to 3, characterised thereby that the switch-on time of the setting member (S1) is controllable in dependence on the flyback converter output voltage (UA2) or the flyback converter output current (IA1) and the switch-off time thereof is kept constant.

5. Current supply device according to one of claims 1 to 4, which comprises a forward converter transformer (Dr1) for conductive isolation of the input circuit from the output circuits, characterised thereby that the regulating range of the current supply device is settable by way of the transformation ratio of the forward converter transformer (Dr1).

## Revendications

1. Dispositif d'alimentation à découpage contenant dans le circuit primaire un élément de réglage (S1) commandé par l'intermédiaire d'un modulateur de largeur d'impulsions (PBM1), équipé d'une sortie à convertisseur direct et d'une sortie à convertisseur de blocage avec des moyens de délivrance de l'énergie excédentaire dans le circuit de sortie à convertisseur de blocage dans le circuit de sortie à convertisseur direct, caractérisé en qu'un commutateur à une voie électronique commandé (S2) est prévu par l'intermédiaire duquel une liaison du circuit de sortie à convertisseur de blocage au circuit de sortie à convertisseur direct peut être commutée et en ce qu'à ce commutateur à une voie (S2) est associé un dispositif de commande (PBM2) en vue de la commande de celui-ci en fonction d'un signal de sortie de convertisseur direct.

2. Dispositif d'alimentation selon la revendication 1, caractérisé en ce que le dispositif de commande (PBM2) est réalisé sous la forme d'un modulateur à largeur d'impulsions.

3. Dispositif d'alimentation selon la revendication 1 ou 2, caractérisé en ce qu'au dispositif de commande (S2, PBM2) ou au modulateur de largeur d'impulsions (PBM2) associé à celui-ci est appliquée, en tant que critère de commande, la partie alternative du signal de sortie du convertisseur direct.

4. Dispositif d'alimentation selon l'une des revendications 1 à 3, caractérisé en ce que le temps de fonctionnement de l'élément de réglage (S1) peut être commandé en fonction de la tension de sortie du convertisseur direct (UA2) ou du courant de sortie du convertisseur direct (IA1) et le temps de coupure de celui-ci est maintenu constant.

5. Dispositif d'alimentation selon l'une des revendications 1 à 4, lequel présenté un transformateur de convertisseur de blocage (Dr1) pour la séparation galvanique du circuit d'entrée des circuits de sortie, caractérisé en ce que la plage de régulation du dispositif d'alimentation est fixable par l'intermediaire du rapport de transformation du transformateur du convertisseur de blocage (Dr1).
